# EUROPÄISCHE PATENTSCHRIFT

(11) **EP 0 439 427 B1**
(45) Veröffentlichungstag und Bekanntmachung des Hinweises auf die Patenterteilung: **30.08.1995**
(21) Anmeldenummer: 91810030.6
(22) Anmeldetag: 15.01.1991
(51) Int. Cl.: C08K 5/00, C09K 15/32

(54) **Wässrige Emulsionen, enthaltend Antioxidantien**
Aqueous emulsions containing antioxidants
Emulsions aqueuses contenant des antioxygènes

(30) Priorität: 24.01.1990 CH 229/90
(43) Veröffentlichungstag der Anmeldung: 31.07.1991
(73) Patentinhaber: CIBA-GEIGY AG, 4002 Basel (CH)
(72) Erfinder: Mollet, Hans, Dr., CH-4153 Reinach (CH); Holer, Martin, CH-4312 Magden (CH)

(56) Entgegenhaltungen:
- EP-A- 0 330 256
- EP-A- 0 333 643
- US-A- 3 962 123
- DERWENT ACCESSION NO. 90-364 547, Questel Tele-systems (WPIL) DERWENT PUBLICATIONS LTD., London

## Beschreibung

Die Erfindung betrifft lagerstabile, nicht sedimentierende Emulsionen, enthaltend Antioxidantien z.B. für die Verwendung zur Stabilisierung von in Emulsion polymerisierten Polymeren und Copolymeren gegen oxidative Einflüsse. Es ist aus der US-Patentschrift 3,962,123 bekannt, lagerstabile Dispersionen, enthaltend phenolische Antioxidantien, herzustellen. Derartige Dispersionen enthalten neben an sich festen phenolischen Antioxidantien Fettsäureseifen oder nichtionische oder anionische oberflächenaktive Mittel und Wasser. Die Herstellung solcher Dispersionen erfolgt durch Mischen der verschiedenen Bestandteile. Das Mischen muss in nachteiliger Weise mit einem Hochgeschwindigkeitsrührer durchgeführt werden. Das bedeutet, dass ein hoher apparativer Aufwand mit hohem Energieaufwand zur Herstellung der Dispersionen notwendig ist.

Es wurden nun neue lagerstabile Emulsionen enthaltend Antioxidantien gefunden, die auch auf handwerklich einfache Weise und unter schonender Behandlung verfügbarer Energiequellen hergestellt werden können.

Erfindungsgemäss enthalten die Emulsionen
a) 10 bis 40 Gew.-%, bezogen auf die Emulsion, Antioxidantien, wobei wenigstens ein phenolisches Antioxidans aus der Reihe der Verbindungen (A) der Formel I 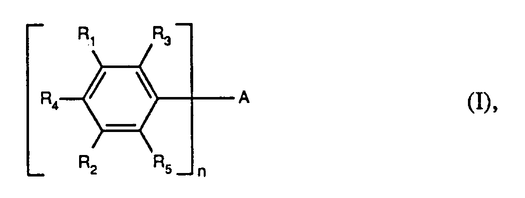 worin
   R₁ = Alkyl mit 1 bis 18 C-Atomen, Cycloalkyl mit 5 bis 12 C-Atomen, mit C₁-C₄-alkyl-substituiertes Cycloalkyl mit 5 bis 12 Ring-C-Atomen, Phenyl oder Aralkyl mit 7 bis 9 C-Atomen bedeutet, oder, wenn R₄ = H oder C₁-C₄-Alkyl und R₅ = -OH, R₁ zusätzlich Wasserstoff bedeuten kann,
   R₂ = -H, Alkyl mit 1 bis 18 C-Atomen, Cycloalkyl mit 5 bis 12 C-Atomen, mit C₁-C₄-alkylsubstituiertes Cycloalkyl mit 5 bis 12 Ring-C-Atomen, Phenyl oder Aralkyl mit 7 bis 9 C-Atomen bedeutet, und
   R₃ = -H oder CH₃ bedeutet und
   n = 1 oder 2 ist und,
   (i) bei n = 1, A die Bedeutung von 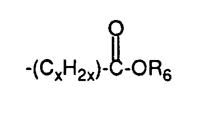 hat,
      x = 0 bis 6 bedeutet,
      R₆ die Bedeutung von -H, Alkyl mit 1 bis 23 C-Atomen, Cycloalkyl mit 5 bis 12 C-Atomen oder mit C₁-C₄-alkylsubstituiertem Cycloalkyl mit 5 bis 12 Ring-C-Atomen hat,
      und
      R₄ die Bedeutung von -OH und R₅ die Bedeutung von -H hat, oder,
   (ii) bei n = 2,
      A die Bedeutung von 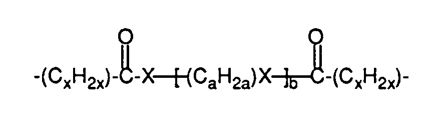 hat,
      x = 0 bis 6 bedeutet,
      X = Sauerstoff oder Schwefel,
      a = 2 bis 6 und
      b = 3 bis 40
      bedeuten und
      R₄ die Bedeutung von -OH und R₅ die Bedeutung von -H hat, oder,
   (iii) bei n = 2,
      A die Bedeutung von -S-, -O-, -CH₂-S-CH₂-, 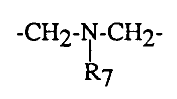 oder eines Alkylenradikals mit 1 bis 20 C-Atomen hat,
      wobei R₄ -OH und R₅ -H oder R₅ -OH und R₄ -H oder C₁-C₄-Alkyl bedeuten, und R₁ zusätzlich -H bedeutet,
      und
      R₇ = Alkyl mit 1 bis 18 C-Atomen, unsubstituiertes, hydroxy-substituiertes oder C₁-C₁₈-alkylsubstituiertes Phenyl oder ein phenyl- oder hydroxyphenyl-substituiertes C₁-C₁₈-Alkyl bedeutet;

   und wenigstens ein Antioxidans aus der Reihe der Verbindungen (B) der Formel II oder/und der Verbindungen (C) der Formel III 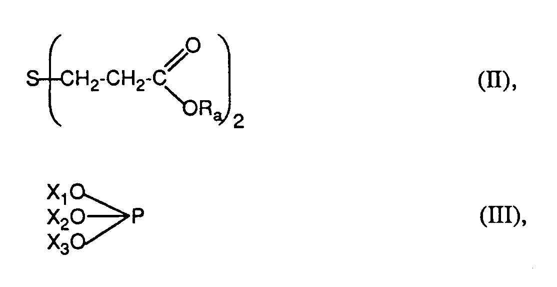 worin Rₐ die Bedeutung von Alkyl mit 8 bis 18 C-Atomen hat und X₁, X₂ und X₃ gleich oder verschieden sind und C₆-C₁₈-Alkyl, C₆-C₁₈-Alkenyl, C₅-C₇-Cycloalkyl, Phenyl oder mit C₁-C₁₈-Alkyl substituiertes Phenyl bedeuten,
b) 0,25 bis 10 Gew.-%, bezogen auf die Emulsion, eines Tensids der Formel R-COOY, wobei R die Bedeutung von Alkyl mit 3 bis 18 C-Atomen oder von Alkenyl mit 3 bis 18 C-Atomen oder von Phenyl-C₃-C₁₈-alkyl hat und Y die Bedeutung eines Alkalimetalles hat,
c) 0,25 bis 10 Gew.-%, bezogen auf die Emulsion, eines Alkohols der Formel R'-OH, wobei R' die Bedeutung von Alkyl mit 4 bis 19 C-Atomen oder von Alkenyl mit 4 bis 19 C-Atomen oder von Phenyl-C₄-C₁₉-alkyl hat, und
d) einen Rest, auf 100 Gew.-%, Wasser.

Im Rahmen vorliegender Erfindung liegt auch ein Verfahren zur Herstellung einer lagerstabilen, nicht sedimentierenden Emulsion, enthaltend Antioxidantien (A), (B) oder/und (C) sowie Wasser, dadurch gekennzeichnet, dass die Antixodantien mit einem Tensid der Formel R-COOY, einem Alkohol der Formel R'-OH und Wasser erhitzt und vermischt werden und gegebenenfalls weiteres Wasser zur Einstellung der gewünschten Konzentration zugegeben wird, wobei die allgemeinen Symbole wie oben definiert sind. Bevorzugt wird dieses Verfahren so durchgeführt, dass die Antioxidantien mit einer Säure der Formel R-COOH und einem Alkohol der Formel R'-OH erhitzt und vermischt werden und anschliessend die Zugabe einer wässrigen Lösung wenigstens eines Alkalimetallhydroxides, eines Alkalimetallbicarbonates oder eines Alkalimetallcarbonates zur Mischung erfolgt, wobei 1-20 Gew.-% des zur Herstellung der Emulsion erforderlichen Wassers als Lösungsmittel für die genannte Alkalimetallverbindung angewendet werden und die Alkalimetallverbindung in etwa äquivalenten Mengen, bezogen auf die Säure, eingesetzt wird, und anschliessend das restliche Wasser zur Einstellung der Konzentration der Emulsion zugegeben wird. Vorzugsweise werden dabei die Antioxidanien in flüssiger Form bzw. in durch Erwärmen verflüssigter Form zugegeben.

Die zur Anwendung gelangenden Antioxidantien an sich können flüssig oder fest sein. Insbesondere ist vorliegende Erfindung auf bei Raumtemperatur in fester Form vorliegende Antioxidantien gerichtet.

Zweckmässig als Antioxidantien (A) sind Verbindungen der allgemeinen Formel Ia 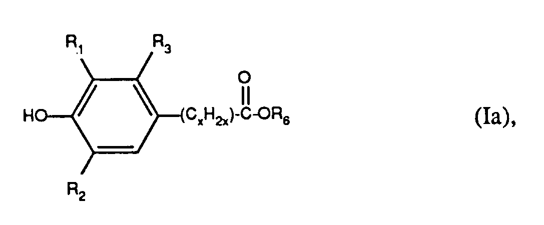
wobei R₁, R₂, R₃ und R₆ die oben angegebenen Bedeutungen haben und x eine Zahl von 2 oder 3 bedeutet.

Besonders zweckmässig sind genannte Verbindungen der Formel Ia, worin die Gruppe -(CₓH₂ₓ)- die Bedeutung von -CH₂-CH₂- oder von 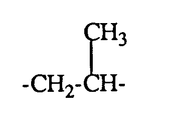
hat.

Weiters werden Verbindungen der Formel Ia bevorzugt, in denen R₁ Methyl oder tert.-Butyl, R₂ tert.-Butyl und R₃ Wasserstoff darstellen. Bevorzugt sind auch Verbindungen der Formel Ia in denen R₆ die Bedeutung von C₄-C₁₈-Alkyl und insbesondere bevorzugt von C₁₂-C₁₈-Alkyl hat, wobei ein C₁₂- oder ein C₁₈-Alkylrest für R₆ ganz besonders bevorzugt sind.

Die ganz besonders bevorzugte Verbindung der Formel Ia ist 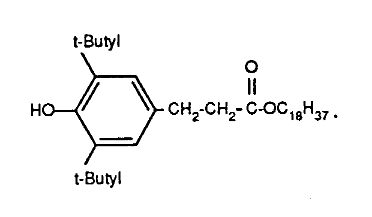
Die Verbindungen der Formel Ia sind an sich aus der US-PS 3,644,482 bekannt und lassen sich z.B. auf die dort beschriebene Weise herstellen.

Zweckmässig sind auch Verbindungen der Formel Ib 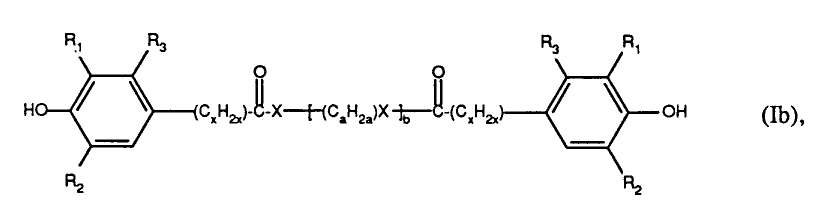
wobei X, R₁, R₂ und R₃ die oben angegebene Bedeutung haben und
x = 2 oder 3
a = 2 bis 4 und
b = 3 bis 28
bedeuten.

Bevorzugt sind Verbindungen der Formel Ib in denen R₁ Methyl oder tert.-Butyl, R₂ tert.-Butyl und R₃ H- darstellen. Bevorzugt sind auch Verbindungen der Formel Ib, in denen X Sauerstoff bedeutet. Bevorzugt sind auch Verbindungen der Formel Ib, in denen die Gruppe -(CₓH₂ₓ)- die Bedeutung von -CH₂-CH₂- oder 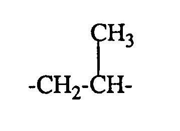
hat.

Weiters sind Verbindungen der Formel Ib bevorzugt, in denen a die Bedeutung von 2 hat. Andere Bevorzugungen betreffen Verbindungen der Formel Ib, in denen b die Bedeutung von 3 hat.

Ganz besonders bevorzugt ist die Verbindung der Formel Ib 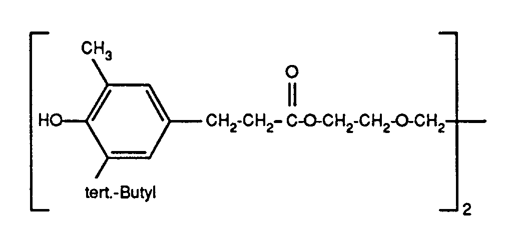
Die Verbindungen der Formel Ib sind an sich aus der DE-OS 2,133,374 bekannt und lassen sich z.B. nach der dort beschriebenen Weise herstellen.

Eine weitere Gruppe zweckmässiger Verbindungen der Formel I weisen die Formel Ic auf, 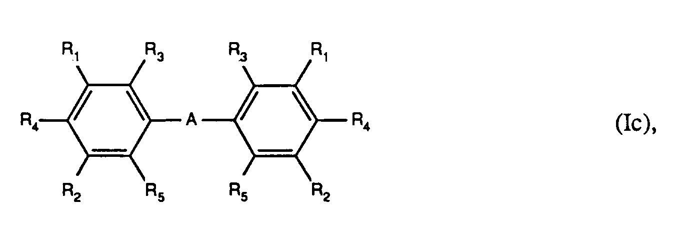
wobei R₁, R₂, R₃, R₄ und R₅ die eingangs genannte Bedeutung aufweisen und A die Bedeutung von -S-, -CH₂-S-CH₂-, -CH₂-, 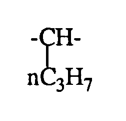
oder 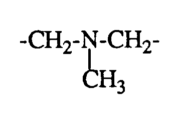
hat.

Bevorzugt in Verbindungen der Formel Ic sind für R₁ und R₂ unabhängig voneinander, die Bedeutungen von -H oder C₁-C₄-Alkyl und besonders bevorzugt von Methyl oder tert.-Butyl.

Besonders bevorzugt sind Verbindungen der Formel Ic, in denen R₁ tert.-Butyl, R₂ -H, R₃ -H, R₄ -OH und R₅ Methyl sind oder in denen R₁ tert.-Butyl, R₂ Methyl, R₃ -H, R₄ -OH und R₅ -H sind. Andere besondere Bevorzugungen in Verbindungen der Formel Ic sind für R₁ und R₂ die Bedeutung von tert.-Butyl, für R₃ und R₅ -H und für R₄ -OH.

Besonders bevorzugt sind auch für R₁ Methyl, für R₂ tert.-Butyl, für R₃ und R₄ -H und für R₅ -OH in Verbindungen der Formel Ic.

Ganz besonders bevorzugt ist die Verbindung der Formel Ic 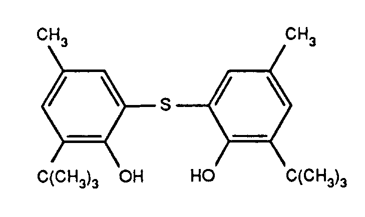
Die Verbindungen der Formel Ic sind an sich beispielsweise aus der GB-PS 1,349,669 bekannt.

Haben in vorstehenden Angaben R₁, R₂ und R₇ die Bedeutung von Alkyl oder wird eine Alkylgruppe mit 1 bis 18 C-Atomen genannt, so sind beispielsweise Methyl, Ethyl, Propyl, Isopropyl, n-Butyl, Isobutyl, 2-Butyl, t-Butyl, Pentyl, Isopentyl, Hexyl, Heptyl, 3-Heptyl, Octyl, 2-Ethylhexyl, Nonyl, Decyl, Undecyl, Dodecyl, Tridecyl, Tetradecyl, Pentadecyl, Hexadecyl, Heptadecyl oder Octadecyl; 2-Ethylbutyl; 1-Methylpentyl; 1,3-Dimethylbutyl; 1,1,3,3-Tetramethylbutyl; 1-Methylhexyl; Isoheptyl; 1-Methylheptyl; 1,1,3-Trimethylhexyl oder 1-Methylundecyl zu nennen. R₁ und R₂ stehen insbesondere für C₁-C₄-Alkyl, wobei zumindest einer der beiden Reste bevorzugt tert.Butyl ist.

R₆ kann die Bedeutung von Alkyl mit 1 bis 23 C-Atomen haben. Beispiele sind obiger Auflistung zu entnehmen, ergänzt durch weitere Beispiele, wie Eicosyl, Henicosyl oder Docosyl.

Für R₄ allgemein und für R₁ und R₂ bevorzugt, wird C₁- bis C₄-Alkyl genannt, wie beispielsweise Methyl, Ethyl, Propyl, Isopropyl, n-Butyl, Isobutyl, 2-Butyl und t-Butyl. Methyl und t-Butyl sind dabei ganz besonders bevorzugt.

Für R₆ sind Alkylreste mit 4 bis 18 C-Atomen bevorzugt und Alkylreste mit 12 bis 18 C-Atomen ganz besonders bevorzugt, wobei besonderes Interesse am Lauryl- und Stearylrest bestehen.

Bevorzugte Beispiele für R₇ sind Alkylreste mit 1 bis 4 C-Atomen, wie sie oben für R₁ und R₂ genannt wurden, die ganz bevorzugten Beispiele sind Methyl und n-Propyl.

Bedeutet R₁, R₂ oder R₆ eine Cycloalkylgruppe mit 5 bis 12 C-Atomen, können in beispielhafter Aufzählung Cyclopentyl, Cyclohexyl, Cyclooctyl oder Cyclodedecyl genannt werden. Beispiele für C₁-C₄-alkylsubstituierte Cycloalkylgruppen mit 5 bis 12 Ring-C-Atomen sind 2- oder 4-Methylcyclohexyl, Dimethylcyclohexyl, Trimethylcyclohexyl und t-Butylcyclohexyl.

Bedeutet R₁ oder R₂ Aralkyl mit 7 bis 9 C-Atomen, so sind Beispiele dafür Benzyl und Methylbenzyl.

R₇ kann C₁-C₁₈-alkylsubstituiertes Phenyl bedeuten, wie beispielsweise Methylphenyl, Dimethylphenyl, Trimethylphenyl, Ethylphenyl, Isopropylphenyl, t-Butylphenyl, Di-t-butylphenyl oder 2,6-Di-t-butyl-4-methylphenyl.

Hat A die Bedeutung eines Alkylenradikals mit 1 bis 20 C-Atomen, so kann dieses geradkettig oder verzweigt sein; Beispiele dafür sind Methylen, Ethylen, Propylen, Trimethylen, 2,2-Dimethyl-1,3-propandiyl, Tetramethylen, Pentamethylen, Hexamethylen, Heptamethylen, Octamethylen, Decamethylen oder Dodecamethylen, wobei Methylen bevorzugt ist.

Im Fall n = 1 und n = 2, wenn 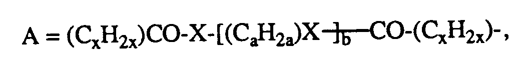
sind R₁ und R₂ vorzugsweise unabhängig voneinander C₁-C₄-Alkyl, wobei mindestens eines von beiden insbesondere t-Butyl ist. R₃ ist bevorzugt -H und X Sauerstoff. R₆ ist insbesondere C₈-C₁₈-Alkyl. Ist A -S-, -O-, -CH₂-S-CH₂-, -CH₂N(R₇)CH₂- oder Alkylen (welches bevorzugt 1-12 C-Atome aufweist), sind R₄ und R₅ verschieden und bedeuten -H oder -OH, R₁, R₂ und R₃ sind unabhängig voneinander C₁-C₄-Alkyl oder -H, wobei vorzugsweise R₂ C₁-C₄-Alkyl, insbesondere t-Butyl bedeutet.

Die beschriebenen Antioxidantien (A) können als Einzelverbindung oder als Gemische untereinander eingesetzt werden.

In Verbindungen (B) der Formel II hat Rₐ die Bedeutung von Alkyl mit 8 bis 18 C-Atomen.

Beispiele für derartige Alkylgruppen sind n-Octyl; 2-Ethylhexyl, n-Nonyl; 1,1,3,3-Tetramethylpentyl; 3,5,5-Trimethylhexyl, Decyl, Undecyl, Dodecyl (Lauryl), Tridecyl, Tetradecyl, Pentadecyl, Hexadecyl, Heptadecyl oder Octadecyl (Stearyl).

Zweckmässig sind Verbindungen der Formel II, worin Rₐ die Bedeutung von Alkyl mit 12 bis 18 C-Atomen hat und bevorzugt ist Rₐ ein Alkylrest mit 12, 13 oder 18 C-Atomen.

Besonders bevorzugt sind Verbindungen der Formel II, worin Rₐ einen Lauryl- oder Stearylrest darstellt und ein Laurylrest ganz besonders bevorzugt ist.

Die genannten Antioxidantien (B) können als Einzelverbindung oder als Gemische untereinander eingesetzt werden.

In den Verbindungen (C) der Formel III weisen mit Alkyl substituierte Phenylgruppen vorzugsweise 1 bis 3, insbesondere 1 oder 2 Alkylgruppen auf. Die Gesamtzahl der C-Atome der Alkylsubstituenten ist vorzugsweise 1 bis 18, insbesondere 4 bis 18. Besonders zu erwähnen sind Verbindungen der Formel III, worin X₁, X₂ und X₃ C₈-C₁₈-Alkyl, Phenyl oder mit 1 oder 2 C₁-C₁₂-Alkylgruppen (insbesondere C₄-C₁₀-Alkylgruppen) substituiertes Phenyl bedeuten, wobei die genannten Alkylphenylgruppen bevorzugt sind. Besonders zweckmässig sind X₁, X₂ und X₃ gleich. Besonders bevorzugt sind X₁, X₂ und X₃ mit einer C₄-C₁₂-Alkylgruppe substituiertes Phenyl, vor allem Octyl- oder Nonylphenyl, vor allem o- oder p-Nonylphenyl.

Bedeuten X₁, X₂ und X₃ C₆-C₁₈-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Geeignete Phosphite der Formel III sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit sowie Aryl-Dialkyl- sowie Alkyl-Diaryl-Phosphite, wie z.B. Phenyldidecyl-, (2,4-Di-tert.-butylphenyl)-di-dodecylphosphit, (2,6-Di-tert.-butylphenyl)-di-dodecylphosphit. Bevorzugt ist Tris-nonylphenylphosphit. Die Nonylgruppe kann z.B. in o- oder p-Stellung stehen bzw. es kann sich um Isomerengemische handeln. Die Verbindungen (C) der Formel III werden meist an Stelle von "Antioxidantien" auch als "Verarbeitungsstabilisatoren" bezeichnet.

Das Mischungsverhältnis von Antioxidantien (A) zu Antioxidantien (B) oder/und kann beispielsweise 3:1 bis 1:5 betragen, zweckmässig ist ein Verhältnis von 2:1 bis 1:3, wobei die Verhältnisse die Gewichtsteile ausdrücken.

Enthalten die erfindungsgemässen Emulsionen Verbindungen (A), (B) und (C), so beträgt deren Mischungsverhältnis beispielsweise 2 zu 1 bis 3 zu 1 bis 3, insbesondere 1 zu 1 bis 2 zu 1 bis 2, z.B. 1 zu 2 zu 2.

Die Emulsion enthält weiter ein Tensid der Formel R-COOY, das vorzugsweise bei der Herstellung der Emulsion in situ aus der Carbonsäure R-COOH und einer Verbindung des Alkalimetalls Y, vorzugsweise dessen Hydroxid, Carbonat oder Bicarbonat, gebildet wird.

Beispiele für Tenside sind solche, in denen R die Bedeutung von C₃-C₁₈-Alkyl hat. Derartige Tenside sind z.B. die Alkalimetallsalze der Buttersäure (Butansäure), Isobuttersäure (2-Methylpropansäure), Valeriansäure (Pentansäure), Isovaleriansäure (3-Methylbutansäure), Pivalinsäure (2,2-Dimethylpropansäure), Laurinsäure (Dodecansäure), Myristinsäure (Tetradecansäure), Palmitinsäure (Hexadecansäure) und Stearinsäure (Octadecansäure).

Bevorzugt sind Salze der Säuren mit 8 bis 18, insbesondere 12 bis 18, C-Atomen, wie Laurinsäure, Myristinsäure, Palmitinsäure und Stearinsäure. Besonders bevorzugt sind die Salze der Laurinsäure und die Stearinsäure.

Vorstehend genannte Säuren können auch, zweckmässig endständig, mit einer Phenylgruppe substituiert sein.

Bedeutet R Alkenyl mit 3 bis 18 C-Atomen, das geradkettig oder verzweigt sein kann, so sind damit z.B. die Methacrylsäure (2-Methylpropensäure), Crotonsäure (trans-2-Butensäure), Isocrotonsäure (cis-2-Butensäure), Oelsäure (cis-9-Octadecensäure), Elaidinsäure (trans-9-Octadecensäure), Sorbinsäure (trans,trans-2,4-Hexadiensäure), Linolsäure (cis,cis-9,12-Octadecadiensäure) oder Linolensäure (cis,cis,cis-9,12,15-Octadecatriensäure) anzuführen.

Mischungen der genannten Säuren unter sich oder kommerziell erhältliche Säuregemische, wie sie beispielsweise als Tall-Oel bekannt sind, sind ebenfalls geeignet.

In Verbindungen eines Alkalimetalls, insbesondere im Alkalihydroxid, Alkalibicarbonat und Alkalicarbonat (Symbol Y) kann das Alkalimetall für Li, Na, K, Rb und Cs stehen, wobei Na und K bevorzugt sind und K besonders bevorzugt ist. Auch Mischungen von Alkalihydroxiden, Alkalicarbonaten und Alkalibicarbonaten sind möglich. Zweckmässig sind Alkalihydroxide und Alkalicarbonate, bevorzugt sind Alkalihydroxide und besonders bevorzugt Kaliumhydroxid.

Das Tensid hat die allgemeine Formel R-COOY, wobei R zweckmässig C₇-C₁₇-, insbesondere C₁₁-C₁₇-Alkyl und Y = Na oder K bedeuten.

Die erfindungsgemässe Emulsion enthält auch einen Alkohol oder eine Mischung von Alkoholen der Formel R'-OH, der die Funktion eines Co-Tensides ausübt. Die Bezeichnung R' steht z.B. für eine geradkettige oder verzweigtkettige Alkylgruppe mit 4 bis 19 C-Atomen und bevorzugt für eine geradkettige Alkylgruppe mit 4 bis19 C-Atomen. Beispiele von Alkoholen sind solche, bei denen R' für n-Butyl, Isobutyl, 2-Butyl, Pentyl, Isopentyl, Hexyl, Heptyl, 3-Heptyl, Octyl, 2-Ethylhexyl, Nonyl, Decyl, Undecyl, Dodecyl, Tridecyl, Tetradecyl, Pentadecyl, Hexadecyl, Heptadecyl oder Octadecyl und gegebenenfalls für 2-Ethylbutyl, 1-Methylpentyl, 1,3-Dimethylbutyl; 1,1,3,3-Tetramethylbutyl; 1-Methylhexyl; Isoheptyl; 1-Methylheptyl; 1,1,3-Trimethylhexyl oder 1-Methylundecyl steht Bevorzugte Bedeutungen für R' sind C₈-C₁₈-, insbesondere C₁₂-C₁₈-Alkylreste und R'-OH steht insbesondere für Lauryl- und Stearylalkohol.

Bedeutet R' Alkenyl mit 4 bis 18 C-Atomen, das geradkettig oder verzweigt sein kann, so ist damit beispielsweise der 2-Methylpropen-, trans-2-Buten-, der cis-9-Octadecen-, trans-9-Octadecen-, der trans,trans-2,4-Hexadien-, der cis,cis-9,12-Octadecadien- oder der cis,cis,cis-9,12,15-Octadecatrienrest in Betracht zu ziehen.

Weitere Beispiele für Alkohole der Formel R'-OH sind: 1-Dodecanol; 1-Tridecanol; 1-Tetradecanol; 1-Pentadecanol; 1-Hexadecanol; 1-Heptadecanol; 1-Octadecanol; 2-Methyl-1-undecanol; 2-Propyl-1-nonanol; 2-Butyl-1-octanol; 2-Methyl-1-tridecanol; 2-Ethyl-1-dodecanol; 2-Propyl-1-undecanol; 2-Butyl-1-decanol; 2-Pentyl-1-nonanol; 2-Hexyl-1-octanol; 2-Methyl-1-pentadecanol; 2-Ethyl-1-tetradecanol; 2-Propyl-1-tridecanol; 2-Butyl-1-dodecanol; 2-Pentyl-1-undecanol; 2-Hexyl-1-decanol; 2-Heptyl-1-decanol; 2-Hexyl-1-nonanol; 2-Octyl-1-octanol; 2-Methyl-1-heptadecanol; 2-Ethyl-1-hexadecanol; 2-Propyl-1-pentadecanol; 2-Butyl-1-tetradecanol; 1-Pentyl-1-tridecanol: 2-Hexyl-1-dodecanol; 2-Octyl-1-decanol; 2-Nonyl-1-nonanol; 2-Dodecanol; 3-Dodecanol; 4-Dodecanol; 5-Dodecanol; 6-Dodecanol; 2-Tetradecanol; 3-Tetradecanol; 4-Tetradecanol; 5-Tetradecanol; 6-Tetradecanol; 7-Tetradecanol; 2-Hexadecanol; 3-Hexadecanol; 4-Hexadecanol; 5-Hexadecanol; 6-Hexadecanol; 7-Hexadecanol; 8-Hexadecanol; 2-Octadecanol; 3-Octadecanol; 4-Octadecanol; 5-Octadecanol; 6-Octadecanol; 7-Octadecanol; 8-Octadecanol; 9-Octadecanol; 9-Octadecanol-1; 2,4,6-Trimethyl-1-heptanol; 2,4,6-8-Tetramethyl-1-nonanol; 3,5,5-Trimethyl-1-hexanol; 3,5,5,7,7-Pentamethyl-1-octanol; 3-Butyl-1-nonanol; 3-Butyl-1-undecanol; 3-Hexyl-1-undecanol; 3-Hexyl-1-tridecanol; 3-Octyl-1-tridecanol; 2-Methyl-2-undecanol; 3-Methyl-3-undecanol; 4-Methyl-4-undecanol; 2-Methyl-2-tridecanol; 3-Methyl-3-tridecanol; 4-Methyl-3-tridecanol; 4-Methyl-4-tridecanol; 3-Ethyl-3-decanol; 3-Ethyl-3-dodecanol; 2,4,6,8-Tetramethyl-2-nonanol; 2-Methyl-3-undecanol; 2-Methyl-4-undecanol; 4-Methyl-2-undecanol; 5-Methyl-2-undecanol; 4-Ethyl-2-decanol; 4-Ethyl-3-decanol; 1-Hexyn-3-ol und Oleylalkohol.

Bevorzugt werden die erfindungsgemässen Emulsionen auf einen leicht alkalischen pH-Wert eingestellt, zum Beispiel auf einen solchen von 7-9, insbesondere 7,5-9, bevorzugt 8-9, z.B. 8,2-8,8. Dies kann mit einer beliebigen Base bewerkstelligt werden, z.B. mit NaOH, KOH, Na- oder K-Carbonaten oder Hydrogencarbonaten, mit Ammoniak oder organischen Aminen, insbesondere mit Mono-, Di- oder insbesondere Triethanolamin.

Die erfindungsgemässen Emulsionen können weitere Antioxidantien ausser den Verbindungen der Reihe (A), (B) oder/und (C) enthalten.

Ganz besonders bevorzugt sind Emulsionen enthaltend wenigstens eine der als zweckmässig oder bevorzugt genannten Verbindungen der Reihe (A), z.B. der Formel Ib, wie vorstehend beschrieben, und dabei insbesondere Triethylenglykol-bis-3(3-tert.butyl-4-hydroxy-5-methylphenyl)propionat, wenigstens eine der als zweckmässig oder bevorzugt genannten Verbindungen der Reihe (B) mit der Formel II, wie vorbeschrieben, wobei Rₐ besonders bevorzugt für einen Lauryl- oder Stearylrest steht, oder/und wenigstens ein Phosphit der vorstehend genannten Reihe, wobei Tris-(nonylphenyl)-phosphit besonders bevorzugt ist.

Das eingangs beschriebene Verfahren zur Herstellung der erfindungsgemässen Emulsion wird zweckmässig derart ausgeführt, dass man die Mischung von Antioxidantien enthaltend Verbindungen (A) und (B) aus obiger Beschreibung, die Säure RCOOH und den Alkohol erhitzt und miteinander vermischt oder, sofern es sich um bei Raumtemperatur feste Stoffe handelt, durch Temperaturerhöhung zusammenschmilzt und miteinander mischt. Falls notwendig wird die Schmelze oder Mischung auf unter 100°C gekühlt, und anschliessend wird beispielsweise eine wässrige Lösung einer Alkalimetallverbindung aus der Reihe von Alkalihydroxiden, Alkalibicarbonaten oder Alkalicarbonaten zugegeben, wobei die Konzentration der Alkaliverbindung beispielsweise 1 bis 50 Gew.-% und vorzugsweise 3-50 Gew.-%, beträgt. Typische Arbeitsweisen sind derart, dass zur Schmelze beispielsweise erst 1 bis 10 Gew.-% des Wassers und anschliessend die Alkaliverbindung in rund 50 Gew.-%-iger Lösung zugegeben werden oder dass zur Schmelze erst die Alkaliverbindung in rund 50 Gew.-%-iger Lösung und anschliessend 1 bis 10 Gew.-% des Wassers zugegeben werden oder dass die Alkaliverbindung, in 5 bis 15 Gew.-% des Wassers gelöst, zugegeben wird. Die Temperatur wird während der Zugabe der Lösung der Alkaliverbindung z.B. bei 60-100°C gehalten werden, weshalb auch die Lösung der Alkaliverbindung in erwärmtem Zustand zur Schmelze oder Mischung gegeben wird. Zum vollständigen und homogenen Mischen der Einzelkomponenten wird zweckmässig gerührt. Dazu können an sich bekannte Rührgefässe und Rührvorrichtungen, die sich zweckmässig beheizen lassen, verwendet werden. Zweckmässig sind beispielsweise Ankerrührer. Die Menge der Alkaliverbindung richtet sich nach der Menge der Säure und lässt sich auf einfache Weise berechnen, indem auf ein Aequivalent Säure zweckmässig ungefähr ein Aequivalent Alkaliverbindung angewendet wird. Abweichungen vom stöchiometrischen Bedarf um etwa ± 5 % beeinflussen die Emulgierwirkung nicht. Die Temperatur, die eingehalten werden muss, liegt üblicherweise zwischen 60°C und 100°C, bevorzugt zwischen 70°C und 90°C. Je nach gewählter Arbeitsweise, wie oben beschrieben, wird die wässrige Lösung der Alkaliverbindung und gegebenenfalls die Teilmenge Wasser langsam zulaufen gelassen. Es bildet sich in der Regel eine Wasser-in-Oel-Emulsion. Die Emulsion weist zweckmässig eine hochviskose bis pastöse Form auf. Durch das Rühren werden hohe Scherkräfte erzeugt, die ihrerseits zu feinstteiligen Emulsionen führen. In diesem Verfahrensstadium kann es angezeigt sein, die Rührintensität zu vermindern und die Temperatur gegen Raumtemperatur absinken zu lassen. An dieser Stelle können auch allfällige weitere Antioxidantien, zudosiert werden. In diese Emulsion wird weiteres Wasser bis zum Erreichen der gewünschten Antioxidans-Konzentration zugegeben, wobei diese zur angestrebten Oel-in-Wasser-Emulsion invertiert. Wie vorstehend erwähnt, soll während des ganzen Emulgierprozesses gerührt werden, wobei es vollständig genügend ist, mit einem einfachen Rührer langsam und mit nur schwacher mechanischer Krafteinwirkung zu rühren, um die Phasen gut zu durchmischen. Dieses Verfahren hat den Vorteil, dass u.a. keine Schaumbildung auftritt. Eventuell doch auftretender Schaum kann z.B. mit Citronensäure (conc. 5 Gew.-% in Wasser) reduziert werden. Als Alkaliverbindung können die genannten Alkalihydroxide, Alkalibicarbonate und Alkalicarbonate genannt werden, wobei Alkalihydroxide bevorzugt und Kaliumhydroxid besonders bevorzugt sind.

Das erfindungsgemässe Verfahren hat den Vorteil, zu stabilen Antioxidans-Emulsionen zu führen. So neigt beispielsweise Dilaurylthiodipropionat beim Versuch des Emulgierens, insbesondere im Gemisch mit phenolischen Antioxidantien, zur Koagulation und es tritt eine starke Kristallisation und Flockung von amorphen Teilchen auf. Nach vorliegender Erfindung werden diese Nachteile überwunden und es entstehen gut fliessende stabile Emulsionen.

Nach dem Abkühlen wird eine Oel-in-Wasser-Emulsion mit einer mittleren Tröpfchengrösse von in der Regel ca. 1-10 »m Durchmesser erhalten.

Die Emulsion enthält 10 bis 40 Gew.-%, zweckmässig 20 bis 30 Gew.-%, Antioxidantien (A), (B) oder/und (C), 0,5 bis 20 Gew.-% der Mischung von Tensid der Formel R-COOY und des Alkohols der Formel R'-OH. Das Gewichtsverhältnis von Tensid R-COOY zu Alkohol ist zweckmässig zwischen 2:1 und 1:4. Bevorzugt ist das Verhältnis Säure R-COOH zu Alkohol R'-OH mindestens 1:1, z.B. zwischen 1:1 und 1:4, insbesondere 1:1 bis 1:3, z.B. 1:1 bis 1:2.

Der Wasseranteil insgesamt in der Emulsion kann von 40 bis knapp 89,5 Gew.-% betragen. Zweckmässig ist ein Wasseranteil von 60 bis 75 Gew.-%. Es liegt im handwerklichen Können, die führ die oben genannte Lösung des Alkalisalzes erforderliche Menge an Wasser zu errechnen und zur Herstellung der Lösung der Alkaliverbindung dem Gesamtanteil des Wassers zu entnehmen. Das verbleibende Wasser stellt dann den Rest auf 100 Gew.-% der Emulsion dar und wird im Herstellungsverfahren der Emulsion zuletzt zugefügt, wie vorstehend beschrieben. Eine derartige Emulsion kann direkt weiterverwendet werden oder kann ein Konzentrat darstellen, das entsprechend seines Verwendungszweckes weiter verdünnt werden kann.

Besonders bevorzugt sind Emulsionen nach der Erfindung, enthaltend
a) 20 bis 30 Gew.-% Antioxidantien
b) 0,8-3,5 Gew.-% eines Tensids der Formel R-COOY, wobei R und Y obengenannte Bedeutungen haben
c) 0,8-7 Gew.-% eines Alkohols der Formel R'OH, wobei R' die obengenannte Bedeutung hat, und
d) 59,5-78,4 Gew.-% Wasser.

Vorliegende Erfindung umfasst auch die Verwendung der erfindungsgemässen und/oder erfindungsgemäss hergestellten Emulsionen zur Stabilisierung von vorzugsweise in Emulsion polymerisierten Polymeren und Copolymeren. Die erfindungsgemässen Emulsionen können in den Herstellungsverfahren nachfolgend aufgezählter Polymere und Copolymere verwendet werden, insoweit es sich bei diesen Herstellungsverfahren um Emulsionspolymerisations- oder -copolymerisationsverfahren handelt, die nach einem in Wasser emulgierbaren Antioxidans verlangen oder während deren Durchführung mit einem Antioxidans versetzt werden können.

### Beispielhaft sind aufgezählt:

1. Polymere von Mono- und Diolefinen, beispielsweise Polypropylen, Polyisobutylen, Polybuten-1, Polymethylpenten- 1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten- 1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.
3a. Kohlenwasserstoffharze (z.B. C₅-C₉) inklusive hydrierte Modifikationen davon (z.B. Klebrigmacherharze).
4. Polystyrol, Poly-(p-methylstyrol), Poly-(α-methylstyrol).
5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.
7. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
8. Polymere, die sich von α,β-ungesättigten Säuren und deren Derivaten ableiten, wie Polyacrylate und Polymethacrylate, Polyacrylamide und Polyacrylnitrile.
9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
11. Homo- und Copolymere von cyclischen Ethern, wie Polyalkylenglykole, Polyethylenoxyd, Polypropylenoxyd oder deren Copolymere mit Bisglycidylethern.
12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
13. Polyphenylenoxide und -sulfide und deren Mischungen mit Styrolpolymeren oder Polyamiden.
14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
16. Polyharnstoffe, Polyimide, Polyamid-imide und Polybenzimidazole.
17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
18. Polycarbonate und Polyestercarbonate.
19. Polysulfone, Polyethersulfone und Polyetherketone.
20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
21. Trocknende und nicht-trocknende Alkydharze.
22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
23. Vernetzbare Acrylharze, die sich von substituierten Acrylsäureestern ableiten, wie z.B. von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z.B. von Bis-glycidylethern oder von cycloaliphatischen Diepoxiden.
26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.
28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.
29. Wässrige Emulsionen natürlicher oder synthetischer Kautschuke, wie z.B. Naturkautschuk-Latex oder Latices von carboxylierten Styrol-Butadien-Copolymeren.

Bevorzugt werden die erfindungsgemässen Emulsionen zur Stabilisierung von in Emulsion polymerisierten Polymeren und Copolymeren, wie ABS, MBS, SB- und SBR-Latices angewendet, wobei die Stabilisierung von in Emulsion polymerisierten Polymeren des ABS besonders bevorzugt sind.

In der Regel wird die Menge der erfindungsgemässen Emulsion so gewählt, dass im Endprodukt, dem Polymerisat oder Copolymerisat das Antioxidans in Mengen von 0,001 bis 10 Gew.-%, zweckmässig 0,01 bis 5 Gew.-% und vorzugsweise 0,1 bis 3 Gew.-% vorliegt.

Zu den Emulsionspolymerisationsreaktionen werden die erfindungsgemässen Emulsionen in den an sich üblichen Mengen zugegeben. Beispielsweise kann das Verhältnis so gewählt werden, dass, bezogen auf das Emulsionspolymerisationssystem, 0,01 bis 10 Gew.-%, vorzugsweise 0,1 bis 5 Gew.-% und besonders bevorzugt 0,5 bis 2,5 Gew.-% Antioxidans, im System vorhanden sind.

Die erfindungsgemässen Emulsionen können dem Polymerisationssystem und insbesondere dem Emulsionspolymerisationssystem vor der Reaktion, zu Beginn oder in fortgeschrittenem Polymerisationsstadium, in der Regel jedoch vor einer Koagulation der sich bildenden Polymeren zugegeben werden. Es ist ferner möglich, die erfindungsgemässen Emulsionen zu einem polymeren Latex zu geben und die Zusammensetzung in wasserdispergierter Form zu halten, bis der Latex in seine endgültige Form, wie beispielsweise als Film, Faser oder Beschichtung, gebracht wird.

Die nachfolgenden Beispiele illustrieren die Erfindung weiter. Alle Angaben in Prozenten und Teilen beziehen sich auf das Gewicht, sofern nicht anders angegeben.

Beispiel 1: 100 g eines Gemisches aus 33,3 g Triethylenglykol-bis-3-(3-tert.butyl-4-hydroxy-5-methylphenyl)propionat und 66,7 g Dilaurylester der β,β'-Thiodipropionsäure werden mit 5,0 g Stearinsäure und 5,0 g Stearylalkohol bei 95°C zusammengeschmolzen. Die Schmelze wird unter Rühren mit einem Ankerrührer bei 175-200 Upm auf 80-82°C gekühlt, und 0,98 g KOH als 50%-ige Lösung (1.23 ml) zugegeben, und 13 ml deionisiertes Wasser in ca. 5 min zugetropft. Dabei bildet sich nach 5-15 min unter ständigem Rühren eine cremige, hochviskose, jedoch noch gut rührbare Paste. Anschliessend werden bei reduzierter Rührgeschwindigkeit (125-150 Upm) 375 ml kaltes deionisiertes Wasser im Verlaufe von etwa 1/4 Stunde zur viskosen Phase zugegeben. Die Temperatur lässt man absinken. Es resultiert eine relativ dünnflüssige Emulsion mit wenig Schaum. Man lässt unter abgeschwächtem Rühren auf 20-25°C abkühlen. Die erhaltene cremige, gut fliessende Emulsion des Typs Oel-in-Wasser hat eine Verteilung der Tröpfchengrössen zwischen 1-10 »m, und ein pH von 8.5. Sie ist bei Raumtemperatur stabil.

Beispiel 2: 25 g Triethylenglykol-bis-3-(3-tert.butyl-4-hydroxy-5-methylphenyl)-propionat und 75 g Dilaurylester von β,β'-Thiodipropionsäure werden mit 5,0 g Stearinsäure und 5,0 g Stearylalkohol bei 95°C zusammengeschmolzen. Diese Schmelze wird unter Rühren mit einem Ankerrührer bei etwa 200 Upm auf 80-82°C abgekühlt. Dann gibt man 25 ml deionisiertes Wasser und 1,23 ml einer 50%-igen KOH-Lösung (0,98 g KOH) hinzu. Nach 5-15 min bildet sich eine cremige, hochviskose, aber noch gut rührbare Paste. Man verfährt weiter wie in Beispiel 1.

Beispiel 3: In einem Rührgefäss, das mit einem Ankerrührer ausgerüstet ist, werden 33,3 g Triethylenglykol-bis-3(3-tert.-butyl-4-hydroxy-5-methylphenyl)propionat und 66,7 g Dilaurylester der β,β'-Thiodipropionsäure, 7,5 g Stearinsäure und 7,5 g Stearylalkohol vorgelegt und bei 95°C zusammengeschmolzen. Zu dieser Schmelze werden nach dem Abkühlen auf ca. 85°C unter Rühren 2,94 g wässrige Kaliumhydroxid-Lösung (50 Gew.-%) zugegeben. Anschliessend lässt man bei 85°C innerhalb ca. 5 Minuten 16 ml deionisiertes Wasser zutropfen. Nach 5 bis 15 Minuten entsteht eine viskose, gut rührbare Paste, zu der innerhalb 5 bis 15 Minuten bei 85°C und bei reduzierter Rührerdrehzahl 66,7 g Trisnonylphenylphosphit zudosiert werden. Zur entstandenen dünnflüssigen Emulsion lässt man innerhalb ca. 15 Minuten 633 g deionisiertes Wasser in Raumtemperatur zufliessen. Die Innentemperatur im Kolben lässt man gleichzeitig absinken. Diese beträgt am Ende der Wasserzugabe ca. 45°C. Unter leichtem Rühren wird auf Raumtemperatur gekühlt, wobei eine dünnflüssige Oel-in-Wasser-Emulsion mit einem Antioxidantien-Gehalt von 20 % und einem pH von ca. 7 mit einer Tröpfchengrösse von 1 bis 5 »m entsteht.

Beispiel 4: Beispiel 3 wird wiederholt, mit der Ausnahme, dass anstelle von 66,7 g des Dilaurylesters der β,β'-Thiodipropionsäure die gleiche Menge des Stearylesters der β,β'-Thiopropionsäure eingesetzt wird. Es entsteht eine dünnflüssige Oel-in-Wasser-Emulsion, die mit der vorbeschriebenen Emulsion gleichwertig ist.

Beispiel 5: In einem 750 ml Planschliffkolben, versehen mit Ankerrührwerk, Tropftrichter, Thermometer und Heizbad, werden 75 g Triethylenglykol-bis-3-(3-tert.-butyl-4-hydroxy-5-methylphenyl)propionat, 7,5 g Stearinsäure und 7,5 g Stearylalkohol vorgelegt. Die Mischung wird auf 90-95°C erhitzt, wobei eine klare Schmelze entsteht. Danach wird die Schmelze mit dem Ankerrührer (150-155 UpM) bei 80-82°C gerührt, 2,96 g 50%ige KOH-Lösung und innerhalb von 5-10 Minuten 15 ml deionisiertes Wasser zugetropft. Nach beendeter Wasserzugabe bildet sich unter Rühren eine crèmige, noch gut rührbare Paste. Nach weiterem 10 minütigem Rühren werden bei 80-82°C innerhalb 10 Minuten 50 g Trinonylphenylphophit (®Irgafos TNPP) zudosiert und die Mischung bei dieser Temperatur weitere 10 Minuten gerührt Anschliessend werden nach Entfernung des Heizbades innerhalb 30 Minuten 337 ml Wasser zudosiert Nach Abkühlen auf 20-30°C wird durch Zugabe von 5 g Triethanolamin der pH-Wert auf 8.5 eingestellt. Endvolumen: ca. 600 ml in Form einer gut fliessenden, leicht schaumigen Oel-in-Wasser-Emulsion. Sie ist bei Raumtemperatur stabil. Allenfalls nach längerer Zeit auftretende Ausfällungen können durch Erhitzen auf 80-82°C problemlos wieder vollständig emulgiert werden.

Die Tropfengrösse in der Emulsion beträgt 1-3 »m, die Dichte ist 0,85 g/ml bei 25°C. Das disperse System weist ein pseudoplastisches Fliessverhalten auf. Die Viskosität nimmt mit der Schergeschwindigkeit stark ab und beträgt bei D=10s⁻¹ 1600 mPa·s (25°C).

Beispiel 6: In einem Glasreaktor mit Ankerrührwerk, Tropftrichter, Thermometer und Heizbad werden 80 g Triethylenglykol-bis-3-(3-tert.butyl-4-hydroxy-5-methylphenyl)-propionat, 160 g Distearylester der β,β'-Thiodipropionsäure(Distearylthiodipropionat), 20 g Stearinsäure und 20 g Stearylalkohol vorgelegt und bei 90-95°C geschmolzen. Unter Rühren bei 150-155 Upm tropft man bei 80-82°C während 5-10 Minuten 7,88 g (5,3 ml) 50%ige KOH-Lösung ein. Dann werden 41 mi deionisiertes Wasser innerhalb 5-10 Minuten zugesetzt, wobei die Temperatur auf mindestens 80°C gehalten wird. Nach weiterem 20-minütigem rühren werden 160 g Trinonylphenylphosphit innerhalb 10 Minuten zugegeben. Nach 10-minütigem Rühren werden 1481 ml deionisiertes Wasser innerhalb 30 Minuten zugegeben, wobei die Temperatur auf 45°C fällt. Nach Abkühlen auf Raumtemperatur und Reduktion der Rührgeschwindigkeit werden 30 g Triethanolamin zugegeben, um den pH-Wert auf 8,5-8,8 einzustellen. Man erhält so eine bei Raumtemperatur stabile, weisse, gut fliessende Oel-in-Wasser-Emulsion mit einer Dichte von 1 g/ml (25°C) und einer Viskosität von 9,5 mPa·s (D=10s⁻¹) bei 25°C. Teilchengrösse: 1-3 Mikron.

Beispiel 7: Zu einem durch Emulsionspolymerisation hergestellten ABS-Latex mit einem Trockengehalt von 32 % werden bei einer Temperatur von 50°C unter Rühren so viel der Emulsion gemäss Beispiel 1 zugegeben, dass der Latex 0,7 Gew.-% Antioxidantien (A+B) enhält.
100 g dieses Latex werden unter starkem Rühren zu 150 g Wasser, das 1,5 % H₂SO₄, bezogen auf das Trockengewicht des ABS, enthält, bei 60°C zugegeben, um den Latex zu koagulieren. Es wird auf 90°C erhitzt, während 2 min. bei dieser Temperatur gehalten und dann abfiltriert. Der Filterrückstand wird mit deionisiertem Wasser ausgewaschen und unter einem Vakuum von 150 mm Hg während 6 Stunden bei 60°C getrocknet. Zur Bestimmung der Schutzwirkung des Antioxidans bei der Trocknung des Latex werden 5 mg des trockenen, aus dem Latex erhaltenen Pulvers in einen Probenhalter aus Aluminium eingewogen, und dieser in ein Differential-Thermoanalysegerät gegeben. Die Probe wird in Luft auf 180°C im DTA-Gerät erhitzt, und die Zeit bis zum Eintritt der Zersetzung gemessen, welche sich in einem Maximum der exothermalen Reaktion bemerkbar macht. Diese Zeit beträgt 125 Minuten.

Beispiel 8: Beispiel 7 wird wiederholt, wobei jedoch dem Latex an Stelle der Emulsion gemäss Beispiel 1 so viel der Emulsion gemäss Beispiel 6 zugesetzt wird, dass der Latex 0,7 Gew.-% Antioxidantien (A+B+C) enthält. Die bis zum Eintritt der Zersetzung gemessene Zeit beträgt 109 Minuten.

## Patentansprüche

1. Lagerstabile, nicht sedimentierende Emulsionen, enthaltend
a) 10 bis 40 Gew.-%, bezogen auf die Emulsion, Antioxidantien, wobei wenigstens ein Antioxidans aus der Reihe der Verbindungen (A) der Formel I 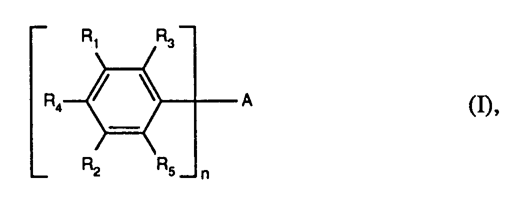 worin
R₁ = Alkyl mit 1 bis 18 C-Atomen, Cycloalkyl mit 5 bis 12 C-Atomen, mit C₁-C₄-alkylsubstituiertes Cycloalkyl mit 5 bis 12 Ring-C-Atomen, Phenyl oder Aralkyl mit 7 bis 9 C-Atomen bedeutet, oder, wenn R₄ = -H oder C₁-C₄-Alkyl und R₅ = -OH, R₁ zusätzlich -H bedeuten kann,
R₂ = -H, Alkyl mit 1 bis 18 C-Atomen, Cycloalkyl mit 5 bis 12 C-Atomen, mit C₁-C₄-alkylsubstituiertes Cycloalkyl mit 5 bis 12 Ring-C-Atomen, Phenyl oder Aralkyl mit 7 bis 9 C-Atomen bedeutet, und
R₃ = -H oder CH₃ bedeutet und
n = 1 oder 2 ist und,
(i) bei n = 1, A die Bedeutung von 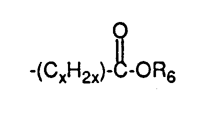 hat,
x = 0 bis 6 bedeutet,
R₆ die Bedeutung von -H, Alkyl mit 1 bis 23 C-Atomen, Cycloalkyl mit 5 bis 12 C-Atomen oder mit C₁-C₄-alkylsubstituiertem Cycloalkyl mit 5 bis 12 Ring-C-Atomen hat,
und
R₄ die Bedeutung von -OH und R₅ die Bedeutung von -H hat, oder,
(ii) bei n = 2,
A die Bedeutung von 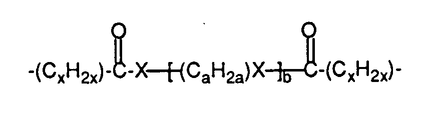 hat,
x = 0 bis 6 bedeutet,
X = Sauerstoff oder Schwefel,
a = 2 bis 6 und
b = 3 bis 40
bedeuten und
R₄ die Bedeutung von -OH und R₅ die Bedeutung von -H hat, oder,
(iii) bei n = 2,
A die Bedeutung von -S-, -O-, -CH₂-S-CH₂-, 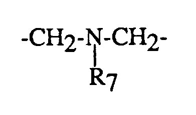 oder eines Alkylenradikals mit 1 bis 20 C-Atomen hat,
wobei R₄ -OH und R₅ -H oder R₅ -OH und R₄ -H oder C₁-C₄-Alkyl bedeuten, und R₁ zusätzlich -H bedeutet,
und
R₇ = Alkyl mit 1 bis 18 C-Atomen, unsubstituiertes, hydroxy-substituiertes oder C₁-C₁₈-alkylsubstituiertes Phenyl oder ein phenyl- oder hydroxyphenyl-substituiertes C₁-C₁₈-Alkyl bedeutet;
und wenigstens ein Antioxidans aus der Reihe der Verbindungen (B) der Formel II oder/und der Verbindungen (C) der Formel III 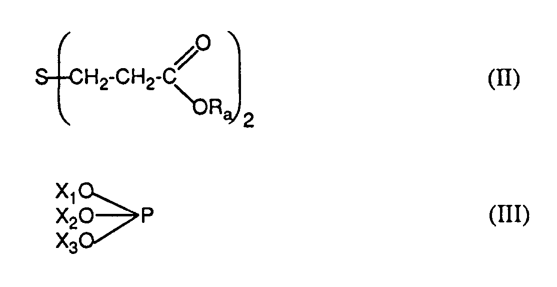 worin Rₐ die Bedeutung von Alkyl mit 8 bis 18 C-Atomen hat und X₁, X₂ und X₃ gleich oder verschieden sind und C₆-C₁₈-Alkyl, C₆-C₁₈-Alkenyl, C₅-C₇-Cycloalkyl, Phenyl oder mit C₁-C₁₈-Alkyl substituiertes Phenyl bedeuten,
b) 0,25 bis 10 Gew.-%, bezogen auf die Emulsion, eines Tensides der Formel R-COOY, wobei R die Bedeutung von Alkyl mit 3 bis 18 C-Atomen oder von Alkenyl mit 3 bis 18 C-Atomen oder von Phenyl-C₃-C₁₈-alkyl hat und Y die Bedeutung eines Alkalimetalles hat,
c) 0,25 bis 10 Gew.-%, bezogen auf die Emulsion, eines Alkohols der Formel R'-OH, wobei R' die Bedeutung von Alkyl mit 4 bis 19 C-Atomen oder von Alkenyl mit 4 bis 19 C-Atomen oder von Phenyl-C₄-C₁₉-alkyl hat, und
d) einen Rest, auf 100 Gew.-%, Wasser.

2. Emulsionenen nach Anspruch 1, enthaltend als Antioxidans (A) Verbindungen der Formel Ia 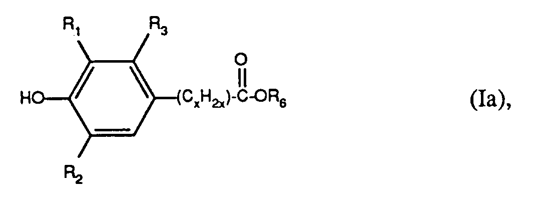 wobei R₁, R₂, R₃ und R₆ die in Anspruch 1 angegebenen Bedeutungen haben und x eine Zahl von 2 oder 3 bedeutet.

3. Emulsionen nach Anspruch 1, enthaltend als Antioxidans (A) Verbindungen der Formel Ib 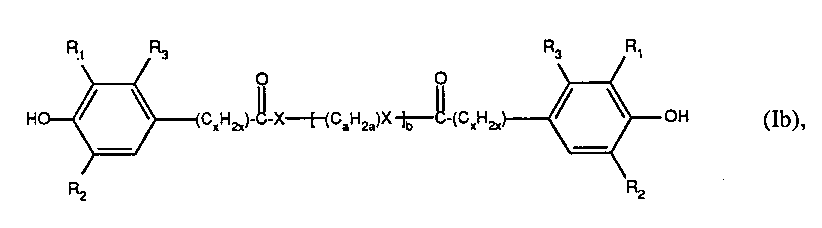 wobei X, R₁, R₂ und R₃ die in Anspruch 1 angegebene Bedeutung haben und
x = 2 oder 3
a = 2 bis 4 und
b = 3 bis 28
bedeuten.

4. Emulsionen nach Anspruch 3, enthaltend Verbindungen der Formel Ib, worin R₁ Methyl oder tert.-Butyl, R₂ tert.-Butyl und R₃ H- darstellen.

5. Emulsionen nach Anspruch 3, enthaltend Verbindungen der Formel Ib, worin X Sauerstoff bedeutet.

6. Emulsionen nach Anspruch 3, enthaltend Verbindungen der Formel Ib, worin die Gruppe -(CₓH₂ₓ)- die Bedeutung von -CH₂-CH₂- oder 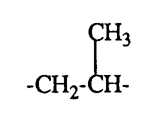 hat.

7. Emulsionen nach Anspruch 3, enthaltend Verbindungen der Formel Ib, worin a die Bedeutung von 2 und b die Bedeutung von 3 hat.

8. Emulsionen nach Anspruch 3, enthaltend eine Verbindung der Formel

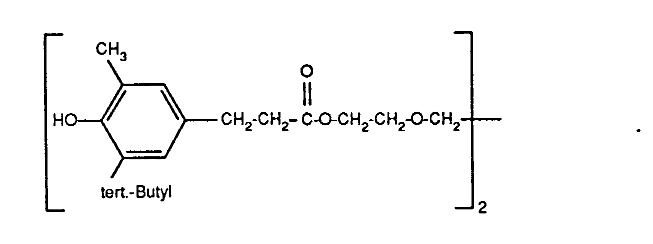

9. Emulsionen nach Anspruch 1, enthaltend als Antioxidans (A) Verbindungen der Formel Ic 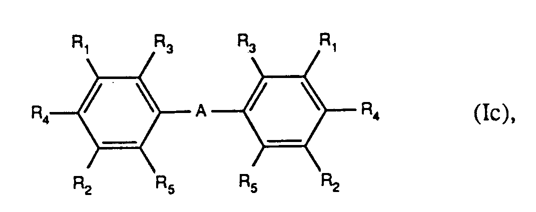 wobei R₁, R₂, R₃, R₄ und R₅ die in Anspruch 1 genannte Bedeutung aufweisen und A die Bedeutung von -S-, -CH₂-S-CH₂-, -CH₂-, 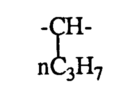 oder 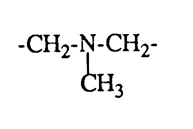 hat.

10. Emulsionen nach Anspruch 1, die als Antioxidantien Verbindungen der Formel I und II enthalten.

11. Emulsionen nach Anspruch 1, enthaltend als Antioxidans (C) Verbindungen der Formel III, worin X₁, X₂ und X₃ C₈-C₁₈-Alkyl, Phenyl oder mit 1 oder 2 C₁-C₁₂-Alkylgruppen substituiertes Phenyl bedeuten.

12. Emulsionen nach Anspruch 1, enthaltend Verbindungen der Formel I sowie Verbindungen der Formel II oder/und III in einem Gewichtsverhältnis von 3:1 bis 1:5.

13. Emulsionen nach Anspruch 1, enthaltend ein Tensid der Formel R-COOY, wobei R Alkyl mit 7 bis 17 C-Atomen und Y Na oder K bedeuten.

14. Emulsionen nach Anspruch 1, worin das Tensid R-COOY in situ, d.h. in der Emulsion, aus einer Säure der Formel R-COOH und einem Alkalimetallhydroxid, -carbonat oder -bicarbonat gebildet wird.

15. Emulsionen nach Anspruch 1, enthaltend einen Alkohol der Formel R'-OH, wobei R' eine Alkylgruppe mit 8 bis 18 C-Atomen darstellt.

16. Emulsionen nach Anspruch 1, worin das Gewichtsverhältnis von Säure R-COOH:Alkohol R'-OH 1:1 bis 1:4 beträgt.

17. Verfahren zur Herstellung von lagerstabilen, nicht sedimentierenden Emulsionen, enthaltend Antioxidantien (A), (B) oder/und (C) sowie Wasser, nach Anspruch 1, dadurch gekennzeichnet, dass die Antixodantien mit einem Tensid der Formel R-COOY, einem Alkohol der Formel R'-OH und Wasser erhitzt und vermischt werden und gegebenenfalls weiteres Wasser zur Einstellung der gewünschten Konzentration zugegeben wird, wobei die allgemeinen Symbole wie in Anspruch 1 definiert sind.

18. Verfahren nach Anspruch 17, dadurch gekennzeichnet, dass die Antioxidanien mit einer Säure der Formel R-COOH und einem Alkohol der Formel R'-OH erhitzt und vermischt werden und anschliessend die Zugabe einer wässrigen Lösung wenigstens eines Alkalimetallhydroxides, eines Alkalimetallbicarbonates oder eines Alkalimetallcarbonates zur Mischung erfolgt, wobei 1-20 Gew.-% des zur Herstellung der Emulsion erforderlichen Wassers als Lösungsmittel für die genannte Alkalimetallverbindung angewendet werden und die Alkalimetallverbindung in etwa äquivalenten Mengen, bezogen auf die Säure, eingesetzt wird, und anschliessend das restliche Wasser zur Einstellung der Konzentration der Emulsion zugegeben wird.

19. Verfahren nach Anspruch 17 oder 18, dadurch gekennzeichnet, dass die Antioxidantien in flüssiger Form bzw. durch Erwärmen verflüssigter Form zugegeben werden.

## Claims

1. A storage-stable, non-sedimenting emulsion containing
a) 10 to 40% by weight, based on the emulsion, of antioxidants, at least one antioxidant [lacuna] from the series comprising the compounds (A) of the formula I 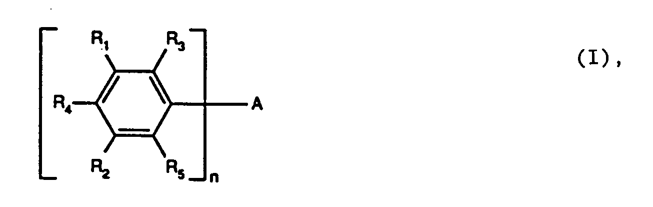 in which
R₁ is alkyl having 1 to 18 C atoms, cycloalkyl having 5 to 12 C atoms,
C₁-C₄alkyl-substituted cycloalkyl having 5 to 12 ring C atoms, phenyl or aralkyl having 7 to 9 C atoms, or, if R₄ is -H or C₁-C₄alkyl and R₅ is -OH, R₁ can additionally be -H,
R₂ is -H, alkyl having 1 to 18 C atoms, cycloalkyl having 5 to 12 C atoms,
C₁-C₄alkyl-substituted cycloalkyl having 5 to 12 ring C atoms, phenyl or aralkyl having 7 to 9 C atoms,
R₃ is -H or CH₃ and
n is 1 or 2, and,
(i) if n is 1, A is 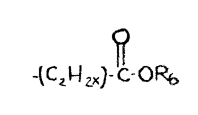 x is 0 to 6,
R₆ is -H, alkyl having 1 to 23 C atoms, cycloalkyl having 5 to 12 C atoms or
C₁-C₄alkyl-substituted cycloalkyl having 5 to 12 ring C atoms,
R₄ is -OH and R₅ is -H, or
(ii) if n is 2,
A is the formula 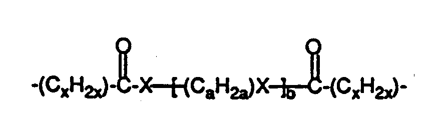 x is 0 to 6,
X is oxygen or sulfur,
a is 2 to 6,
b is 3 to 40,
R₄ is -OH and R₅ is -H, or
(iii) if n is 2,
A is -S-, -O-, -CH₂-S-CH₂-, 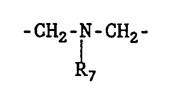 or an alkylene radical having 1 to 20 C atoms,
and R₄ is -OH and R₅ is -H, or R₅ is -OH and R₄ is -H or C₁-C₄alkyl, and R₁ is additionally -H,
and
R₇ is alkyl having 1 to 18 C atoms, unsubstituted, hydroxy-substituted or C₁-C₁₈alkyl-substituted phenyl or a phenyl- or hydroxyphenyl-substituted C₁-C₁₈alkyl;
and at least one antioxidant [lacuna] from the series comprising compounds (B) of the formula II and/or of the compounds (C) of the formula III 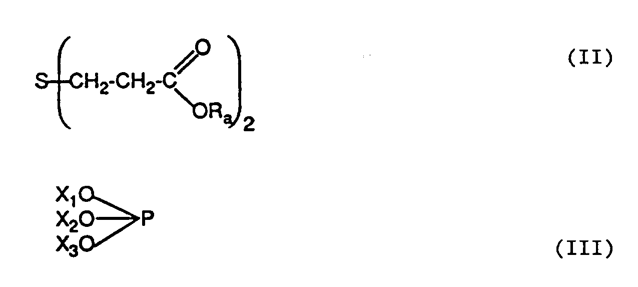 in which Rₐ is alkyl having 8 to 18 C atoms and X₁, X₂ and X₃ are identical or different and are C₆-C₁₈alkyl, C₆-C₁₈alkenyl, C₅-C₇cycloalkyl, phenyl or c₁-C₁₈alkyl-substituted phenyl,
b) 0.25 to 10% by weight, based on the emulsion, of a surfactant of the formula R-COOY, in which R is alkyl having 3 to 18 C atoms, alkenyl having 3 to 18 C atoms or phenyl-C₃-C₁₈alkyl and Y is an alkali metal,
c) 0.25 to 10% by weight, based on the emulsion, of an alcohol of the formula R'-OH, in which R' is alkyl having 4 to 19 C atoms, alkenyl having 4 to 19 C atoms or phenyl-C₄-C₁₉-alkyl, and
d) water as the remainder to make up to 100% by weight.

2. An emulsion according to claim 1, containing as the antioxidant (A) a compound of the formula Ia 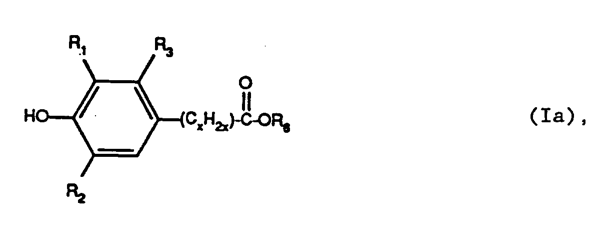 in which R₁, R₂, R₃ and R₆ are as defined in claim 1 and x is the number 2 or 3.

3. An emulsion according to claim 1, containing as the antioxidant (A) a compound of the formula Ib 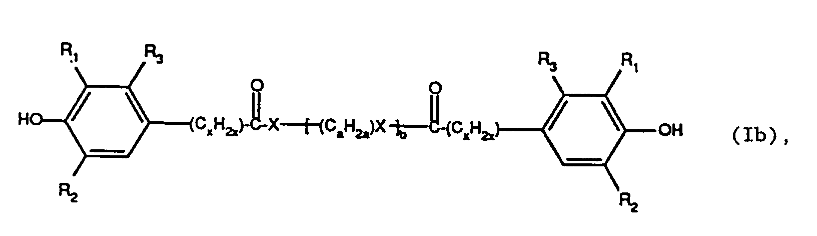 in which X, R₁, R₂ and R₃ are as defined in claim 1,
x is 2 or 3,
a is 2 to 4 and
b is 3 to 28.

4. An emulsion according to claim 3, containing a compound of the formula Ib, in which R₁ is methyl or tert.butyl, R₂ is tert.butyl and R₃ is H-.

5. An emulsion according to claim 3, containing a compound of the formula Ib in which X is oxygen.

6. An emulsion according to claim 3, containing a compound of the formula Ib in which the group -(CₓH₂ₓ)- is -CH₂-CH₂- or

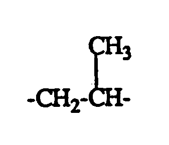

7. An emulsion according to claim 3, containing a compound of the formula Ib in which a is 2 and b is 3.

8. An emulsion according to claim 3, containing a compound of the formula

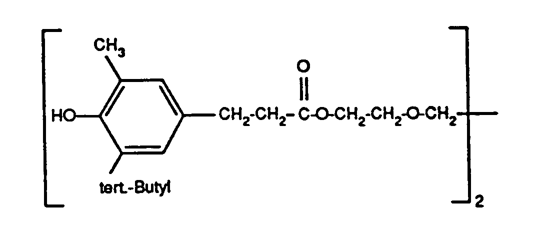

9. An emulsion according to claim 1, containing as the antioxidant (A) a compound of the formula Ic 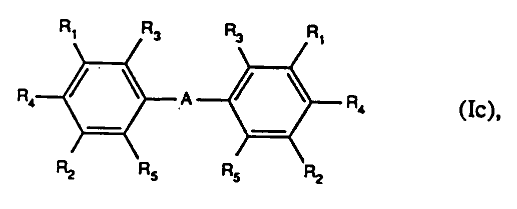 in which R₁, R₂, R₃, R₄ and R₅ are as defined in claim 1 and A is -S-, -CH₂-S-CH₂, -CH₂-,

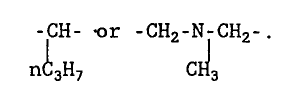

10. An emulsion according to claim 1, which contains as antioxidant compounds of the formulae I and II.

11. An emulsion according to claim 1, containing as the antioxidant (C) a compound of the formula III in which X₁, X₂ and X₃ are C₈-C₁₈alkyl, phenyl or phenyl which is substituted by 1 or 2 C₁-C₁₂alkyl groups.

12. An emulsion according to claim 1, containing a compound of the formula I and a compound of the formula II and/or III in a weight ratio of 3:1 to 1:5.

13. An emulsion according to claim 1, containing a surfactant of the formula R-COOY, in which R is alkyl having 7 to 17 C atoms and Y is Na or K.

14. An emulsion according to claim 1, in which the surfactant R-COOY is formed in situ, that is to say in the emulsion of an acid of the formula R-COOH and an alkali metal hydroxide, carbonate or bicarbonate.

15. An emulsion according to claim 1, containing an alcohol of the formula R'-OH, in which R' is an alkyl group having 8 to 18 C atoms.

16. An emulsion according to claim 1, in which the weight ratio of acid R-COOH:alcohol R'-OH is 1:1 to 1:4.

17. A process for the preparation of a storage-stable, non-sedimenting emulsion containing antioxidants (A), (B) and/or (C) and water according to claim 1, which comprises heating and mixing the antioxidants with a surfactant of the formula R-COOY, an alcohol of the formula R'-OH and water and if appropriate adding further water to establish the desired concentration, the general symbols being as defined in claim 1.

18. The process according to claim 17, wherein the antioxidants are heated and mixed with an acid of the formula R-COOH and an alcohol of the formula R'-OH and an aqueous solution of at least one alkali metal hydroxide, one alkali metal bicarbonate or one alkali metal carbonate is then added to the mixture, 1-20% by weight of the water required for the preparation of the emulsion being used as the solvent for the alkali metal compound mentioned and the alkali metal compound being employed in approximately equivalent amounts, based on the acid, and the remainder of the water is then added to establish the concentration of the emulsion.

19. The process according to claim 17 or 18, wherein the antioxidants are added in liquid form or in the liquefied form obtained by heating.

## Revendications

1. Emulsions stables au stockage, ne subissant pas de sédimentation, qui contiennent :
(a) de 10 à 40 % en poids, par rapport à l'émulsion, d'antioxydants, où au moins un antioxydant phénolique est choisi parmi l'ensemble des composés (A) de formule I : 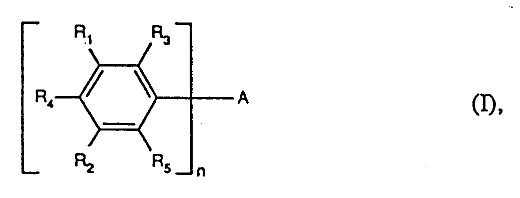 dans laquelle :
R₁ est un radical alkyle ayant de 1 à 18 atomes de carbone, cycloalkyle ayant de 5 à 12 atomes de carbone, cycloalkyle substitué par des substituants alkyle en C₁ à C₄ et comportant de 5 à 12 atomes de carbone dans le cycle, phényle ou aralkyle ayant de 7 à 9 atomes de carbone, ou encore, quand R₄ est H ou un radical alkyle en C₁ à C₄ et R₅ est -OH, R₁ peut en outre être l'hydrogène,
R₂ est -H ou un radical alkyle ayant de 1 à 18 atomes de carbone, cycloalkyle ayant de 5 à 12 atomes de carbone, cycloalkyle substitué par des substituants alkyle en C₁ à C₄ et ayant de 5 à 12 atomes de carbone nucléaire, phényle ou aralkyle ayant de 7 à 9 atomes de carbone, et
R₃ est -H ou CH₃, et
n vaut 1 ou 2,
(i) pour n = 1, A représente le radical : 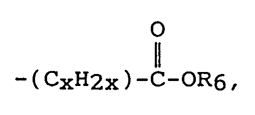 x vaut de 0 à 6,
R₆ représente -H ou un radical alkyle ayant de 1 à 23 atomes de carbone, cycloalkyle ayant de 5 à 12 atomes de carbone ou cycloalkyle substitué par des substituants alkyle en C₁ à C₄ et ayant de 5 à 12 atomes de carbone dans le cycle, et
R₄ est -OH et R₅ est -H, ou bien
(ii) pour n = 2,
A représente : 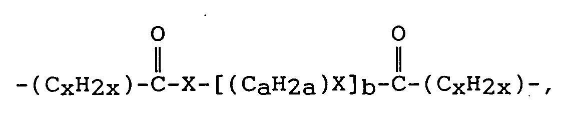 x vaut de 0 à 6,
X est un oxygène ou un soufre,
a vaut de 2 à 6, et
b vaut de 3 à 40, et
R₄ représente -OH et R₅ représente -H, ou bien
(iii) pour n = 2
A représente -S-, -O-, -CH₂-S-CH₂-, 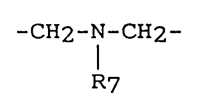 ou un radical alkyle ayant de 1 à 20 atomes de carbone, où
R₄ est -OH et R₅ est -H ou bien R₅ est -OH et R₄ est -H ou un radical alkyle en C₁ à C₄, et R₁ signifie en outre -H, et
R₇ est un radical alkyle ayant de 1 à 18 atomes de carbone, phényle non substitué, hydroxylé ou substitué par des substituants alkyle en C₁ à C₁₈, ou encore un radical alkyle en C₁ à C₁₈, substitué par des substituants phényle ou hydroxyphényle ;
et au moins un antioxydant est choisi parmi l'ensemble des composés (B) de formule II et/ou des composés (C) de formule III : 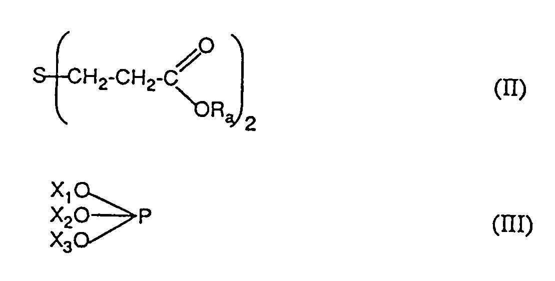 où Rₐ représente un radical alkyle ayant de 8 à 18 atomes de carbone, et X₁, X₂ et X₃ sont identiques ou différents et représentent des radicaux alkyle en C₆ à C₁₈, alcényle en C₆ à C₁₈, cycloalkyle en C₅ à C₇, phényle ou phényle substitué par des substituants alkyle en C₁ à C₁₈,
(b) de 0,25 à 10 % en poids, par rapport à l'émulsion, d'un tensioactif de formule R-COOY, dans laquelle R est un radical alkyle ayant de 3 à 18 atomes de carbone, ou alcényle ayant de 3 à 18 atomes de carbone ou phényl-(alkyle en C₃ à C₁₈), et Y est un métal alcalin,
(c) de 0,25 à 10 % en poids, par rapport à l'émulsion, d'un alcool R'-OH, où R' est un radical alkyle ayant de 4 à 19 atomes de carbone ou alcényle ayant de 4 à 19 atomes de carbone ou phényl-(alkyle en C₄ à C₁₉), et
(d) d'eau, pour compléter à 100 % en poids.

2. Emulsions selon la revendication 1, contenant comme antioxydants (A) des composés de formule Ia : 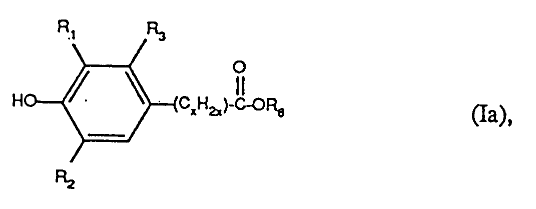 dans laquelle R₁, R₂, R₃ et R₆ ont les significations données dans la revendication 1, et x est un nombre valant 2 ou 3.

3. Emulsions selon la revendication 1, contenant comme antioxydants (A) des composés de formule Ib : 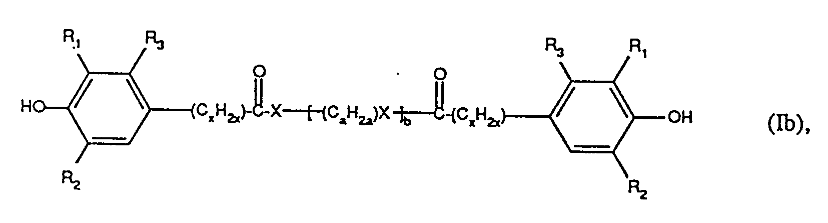 dans laquelle X, R₁, R₂ et R₃ ont les significations données dans la revendication 1, et
x vaut 2 ou 3,
a vaut 2 à 4, et
b vaut 3 à 28.

4. Emulsions selon la revendication 3, qui contiennent des composés de formule Ib dans lesquels R₁ est le radical méthyle ou tert-butyle, R₂ est le radical tert-butyle et R₃ est H.

5. Emulsions selon la revendication 3, contenant des composés de formule Ib dans lesquels X est un oxygène.

6. Emulsions selon la revendication 3, contenant des composés de formule Ib dans lesquels le groupe -(CₓH₂ₓ)- représente -CH₂-CH₂- ou

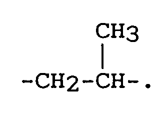

7. Emulsions selon la revendication 3, contenant des composés de formule Ib, dans lesquels a représente 2 et b vaut 3.

8. Emulsions selon la revendication 3, contenant un composé ayant la formule suivante :

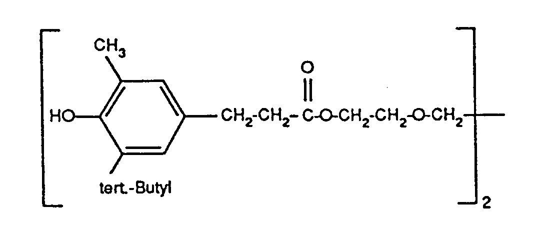

9. Emulsions selon la revendication 1, contenant comme antioxydants (A) des composés de formule Ic : 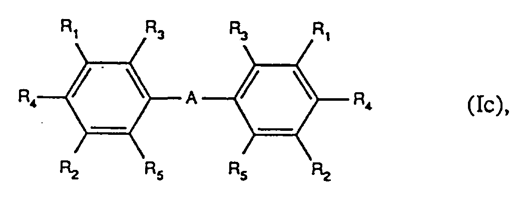 dans laquelle R₁, R₂, R₃, R₄ et R₅ ont les significations données dans la revendication 1, et A représente -s-, -CH₂-S-CH₂-, -CH₂-,

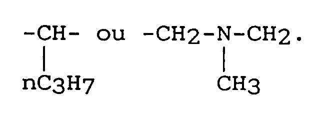

10. Emulsions selon la revendication 1, qui contiennent comme antioxydants des composés de formules I et II.

11. Emulsions selon la revendication 1, qui contiennent comme antioxydants (C) des composés de formule III, dans lesquels X₁, X₂ et X₃ sont des radicaux alkyle en C₈ à C₁₈, phényle, ou phényle substitué par un ou deux groupes alkyle en C₁ à C₁₂.

12. Emulsions selon la revendication 1, contenant des composés de formule I ainsi que des composés de formules II et/ou III selon un rapport pondéral de 3:1 à 1:5.

13. Emulsions selon la revendication 1, contenant un tensioactif de formule R-COOY, où R est un radical alkyle ayant de 7 à 17 atomes de carbone, et Y est Na ou K.

14. Emulsions selon la revendication 1, dans lesquelles le tensioactif R-COOY est formé in situ, c'est-à-dire en émulsion, à partir d'un acide de formule R-COOH et d'un hydroxyde, d'un carbonate ou d'un bicarbonate d'un métal alcalin.

15. Emulsions selon la revendication 1, contenant un alcool de formule R'-OH dans laquelle R' est un groupe alkyle ayant de 8 à 18 atomes de carbone.

16. Emulsions selon la revendication 1 dans lesquelles le rapport pondéral de l'acide R-COOH à l'alcool R'-OH est de 1:1 à 1:4.

17. Procédé pour préparer une émulsion stable au stockage, ne subissant pas de sédimentation, contenant des antioxydants (A), (B) et/ou (C), ainsi que de l'eau, caractérisé en ce que les antioxydants sont chauffés et mélangés avec un tensioactif de formule R-COOY, un alcool de formule R'-OH et de l'eau, et que l'on ajoute éventuellement une nouvelle quantité d'eau pour ajuster la concentration souhaitée, les symboles généraux étant selon la revendication 1.

18. Procédé selon la revendication 17, caractérisé en ce que les antioxydants sont chauffés et mélangés avec un acide de formule R-COOH et un alcool de formule R'-OH, puis que l'on procède à l'addition, au mélange, d'une solution aqueuse d'au moins un hydroxyde d'un métal alcalin, d'un bicarbonate d'un métal alcalin ou d'un carbonate d'un métal alcalin, auquel cas on utilise de 1 à 20 % en poids de la quantité d'eau nécessaire à la préparation de l'émulsion, pour servir de solvant au composé mentionné ci-dessus d'un métal alcalin, et que l'on utilise le composé du métal alcalin en des quantités approximativement équimolaires par rapport à l'acide, le reste de l'eau étant ajouté ensuite pour ajuster la concentration de l'émulsion.

19. Procédé selon la revendication 17 ou 18, caractérisé en ce que les antioxydants sont ajoutés sous forme liquide ou sous forme liquéfiée par chauffage.
